# EUROPEAN PATENT APPLICATION

(11) **EP 4 110 005 A1**
(43) Date of publication of application: **28.12.2022**
(21) Application number: 21774562.9
(22) Date of filing: 08.03.2021
(51) Int. Cl.: H04W 76/20, H04W 76/15, H04W 74/08, H04L 29/06, H04W 84/12

(54) **METHOD AND DEVICE FOR CHANNEL CONNECTION IN WIRELESS COMMUNICATION SYSTEM SUPPORTING MULTIPLE LINKS**

(30) Priority: 24.03.2020 KR 20200035832
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); HONG, Han Seul, Seoul 03721 (KR)
(74) Representative: Isarpatent
(86) International application number: PCT/KR2021/002831
(87) International publication number: WO 2021/194125

(57) **Abstract**

A method and device are disclosed for channel connection in a wireless communication system supporting multiple links. An operation method for the device comprises the steps of: performing a first back-off operation in a first link among multiple links; stopping the first back-off operation when the first link is determined to be in a busy state due to the first back-off operation; and using a new back-off counter value to perform a second back-off operation in a second link among the multiple links when the second link is in an idle state in a preset period prior to the point in time at which the first back-off operation is stopped.

## Description

### TECHNICAL FIELD

The present disclosure relates to a wireless local area network (wireless LAN) communication technique, and more particularly, to a channel access technique for a wireless LAN supporting a multi-link.

### BACKGROUND

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). The initial version of the IEEE 802.11 standard can support a communication speed of 1 to 2 megabits per second (Mbps). The later versions of the IEEE 802.11 standard are being standardized in the direction of improving the communication speed.

The revised version of the IEEE 802.11a standard can support a communication speed of up to 54 Mbps using an orthogonal frequency division multiplexing (OFDM) scheme in a 5 giga hertz (GHz) band. The IEEE 802.11b standard utilizes a direct sequence spread spectrum (DSSS) scheme to support a communication speed of up to 11Mbps in a 2.4 GHz band where the initial version operates.

The IEEE 802.11n standard supporting a high throughput (HT) wireless LAN technology has been developed due to the demand for higher speed. The IEEE 802.11n standard may support the OFDM scheme. By supporting channel bandwidth expansion techniques and multiple input multiple output (MIMO) techniques in the IEEE 802.11n standard, the maximum communication speeds in the 2.4 GHz band and the 5 GHz band can be improved. For example, the IEEE 802.11n standard can support a communication speed of up to 600 Mbps by using 4 spatial streams and a 40 MHz bandwidth.

As the above-described wireless LAN technologies have been developed and spread, applications using the wireless LAN technologies have been diversified, and a demand for a wireless LAN technology supporting a higher throughput has arisen. Accordingly, a frequency bandwidth (e.g., 'maximum 160 MHz bandwidth' or '80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As the demand for wireless LAN technologies further increases, the IEEE 802.11ax standard has been developed to increase a frequency efficiency in a dense environment. In the IEEE 802.11ax standard, a communication procedure may be performed using multi-user (MU) orthogonal frequency division multiple access (OFDMA) techniques. In the IEEE 802.11ax standard, uplink communication may be performed using the MU MIMO techniques and/or OFDMA techniques.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since the multi-link operation is an operation that is not defined in the existing WLAN standard, it may be necessary to define detailed operations according to the environment in which the multi-link operation is performed. In particular, when two or more bands performing the multi-link operation are close to each other, simultaneous transmission and reception operations through a multi-link may not be performed within one device due to signal interference between the adjacent links. In particular, when a signal interference level between the adjacent links is equal to or greater than a specific level, a backoff operation for transmission in another link may not be performed due to the interference while performing a transmission operation in one link. Therefore, multi-link operations in the above situation need to be defined.

Meanwhile, the technologies that are the background of the present disclosure are written to improve the understanding of the background of the present disclosure and may include content that is not already known to those of ordinary skill in the art to which the present disclosure belongs.

### SUMMARY

### Technical Problem

The present disclosure is directed to providing a method and an apparatus for channel access in a wireless local area network (LAN) system supporting a multi-link.

### Technical Solution

An operation method of a device, according to a first embodiment of the present disclosure for achieving the above-described objective, may comprise: performing a first backoff operation in a first link in the multi-link; in response to determining the first link to be in a busy state by the first backoff operation, stopping the first backoff operation; and in response to identifying that a second link in the multi-link is in an idle state for a preset period before a time at which the first backoff operation is stopped, performing a second backoff operation in the second link using a new backoff counter value.

The operation method may further comprise: in response to determining the second link to be in a busy state by the second backoff operation, stopping the second backoff operation; and performing a third backoff operation in the first link when the busy state of the first link ends. The third backoff operation is performed based on a remaining backoff counter value of the stopped first backoff operation.

The operation method may further comprise: in response to determining the second link to be in a busy state by the second backoff operation, stopping the second backoff operation; and performing a third backoff operation in the second link when the busy state of the second link ends, wherein the third backoff operation is performed based on a remaining backoff counter value of the stopped second backoff operation.

When the first backoff operation is stopped, a link in which the device performs the backoff operation may be changed from the first link to the second link.

The new backoff counter value may be selected within a contention window and may be independent of a backoff counter value of the first backoff operation.

When the second link is in the idle state for the preset period, a backoff counter value of the second link may be maintained at 0.

The preset period may be an arbitration interframe space (AIFS).

The second backoff operation may be performed when the second link is in the idle state for the preset period and a backoff counter value of the second link is maintained at 0.

Even when the second link is in the idle state for the preset period, if the first backoff operation is being performed in the first link, a frame transmission operation may not be performed in the second link.

A device, according to a second embodiment of the present disclosure for achieving the above-described objective, may comprise: a processor; a first communication node performing communications using a first link in the multi-link according to control of the processor; a second communication node performing communications using a second link in the multi-link according to control of the processor; and a memory storing one or more instructions executable in each of the processor, the first communication node, and the second communication node. The one or more instructions may be configured to cause the first communication node to perform a first backoff operation in the first link. The one or more instructions may be configured to cause the first communication node to, in response to determining the first link to be in a busy state by the first backoff operation, stop the first backoff operation. The one or more instructions may be configured to cause the second communication node to, in response to identifying that the second link is in an idle state for a preset period before a time at which the first backoff operation is stopped, perform a second backoff operation in the second link using a new backoff counter value.

The one or more instructions may further cause the second communication node to, in response to determining the second link to be in a busy state by the second backoff operation, stop the second backoff operation. The one or more instructions may further cause the first communication node to perform a third backoff operation in the first link when the busy state of the first link ends. The third backoff operation is performed based on a remaining backoff counter value of the stopped first backoff operation.

The one or more instructions may further cause the second communication node to, in response to determining the second link to be in a busy state by the second backoff operation, stop the second backoff operation. The one or more instructions may further cause the second communication node to, perform a third backoff operation in the second link when the busy state of the second link ends. The third backoff operation is performed based on a remaining backoff counter value of the stopped second backoff operation.

When the first backoff operation is stopped, a link in which the device performs the backoff operation may be changed from the first link to the second link.

The new backoff counter value may be selected within a contention window and may be independent of a backoff counter value of the first backoff operation.

When the second link is in the idle state for the preset period, a backoff counter value of the second link may be maintained at 0.

The preset period may be an arbitration interframe space (AIFS).

The second backoff operation may be performed when the second link is in the idle state for the preset period and a backoff counter value of the second link is maintained at 0.

Even when the second link is in the idle state for the preset period, if the first backoff operation is being performed in the first link, a frame transmission operation may not be performed in the second link.

### Advantageous Effects

According to the present disclosure, communications between a STA and an AP may be performed using a multi-link. When some links (e.g., some channels) in the multi-link are adjacent to each other and simultaneous transmission/reception operations therein are difficult, a channel access operation may be performed in a first link, and then an operation of identifying a channel occupancy state of a second link may be performed for a preset time. When a channel is in an idle state for the preset time, a transmission operation using the multi-link (hereinafter, referred to as a 'multi-link transmission operation') may be performed.

After the operation of identifying the channel occupancy state of the second link is performed, a communication operation may vary according to a state of the corresponding channel (e.g., idle state or busy state (i.e., occupied state)). If the channel state is in the busy state for the preset time in the second link, a data transmission operation may be performed using only the first link. In particular, when a channel state is identified to be in a busy state while performing the channel access operation in the first link, a backoff operation in the first link may be stopped, and a channel access operation (e.g., backoff operation) may be performed in the second link. Accordingly, a device using the multi-link can efficiently perform the channel access operation and/or the data transmission operation.

When both links are in busy states, the backoff operation may be performed in a link having an earlier end time of the busy state among the two links. When performing a link change operation for the link in which the backoff operation is performed and/or a multi-link transmission operation, a channel capacity may increase and a channel access time may decrease in the multi-link.

The present disclosure can be applied to communication nodes (e.g., device, STA, AP, management apparatus) using the wireless LAN communication technology as well as communication nodes (e.g., base stations, terminals) using the cellular communication technology.

### DESCRIPTION OF DRAWINGS

FIG. 1 is a block diagram illustrating a first embodiment of a communication node constituting a wireless local area network (LAN) system.
FIG. 2 is a conceptual diagram illustrating a first embodiment of multi-links configured between multi-link devices (MLDs).
FIG. 3 is a sequence chart illustrating a first embodiment of a negotiation procedure for a multi-link operation in a wireless LAN system.
FIG. 4A is a timing diagram illustrating a first embodiment of a channel access method in a wireless LAN system supporting a multi-link.
FIG. 4B is a timing diagram illustrating a second embodiment of a channel access method in a wireless LAN system supporting a multi-link.
FIG. 5 is a timing diagram illustrating a third embodiment of a channel access method in a wireless LAN system supporting a multi-link.
FIG. 6 is a timing diagram illustrating a fourth embodiment of a channel access method in a wireless LAN system supporting a multi-link.
FIG. 7 is a timing diagram illustrating a fifth embodiment of a channel access method in a wireless LAN system supporting a multi-link.
FIG. 8 is a timing diagram illustrating a sixth embodiment of a channel access method in a wireless LAN system supporting a multi-link.
FIG. 9 is a timing diagram illustrating a seventh embodiment of a channel access method in a wireless LAN system supporting a multi-link.
FIG. 10 is a timing diagram illustrating an eighth embodiment of a channel access method in a wireless LAN system supporting a multi-link.
FIG. 11 is a timing diagram illustrating a ninth embodiment of a channel access method in a wireless LAN system supporting a multi-link.
FIG. 12 is a timing diagram illustrating a tenth embodiment of a channel access method in a wireless LAN system supporting a multi-link.
FIG. 13 is a timing diagram illustrating an eleventh embodiment of a channel access method in a wireless LAN system supporting a multi-link.

### DETAILED DESCRIPTION

Since the present disclosure may be variously modified and may have several forms, specific embodiments are shown in the accompanying drawings and be described in the detailed description. It should be understood, however, that it is not intended to limit the present disclosure to the specific embodiments. On the contrary, the present disclosure is intended to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named as a second component without departing from the scope of the present disclosure, and the second component may also be similarly named as the first component. The term "and/or" means any one or a combination of a plurality of related and described items.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it should be understood that a further component is not disposed therebetween.

The terms used in the present disclosure are only used to describe specific embodiments and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure should be described in detail with reference to the accompanying drawings. In describing the disclosure, to facilitate the entire understanding of the disclosure, like numbers refer to like elements throughout the description of the figures. The repetitive description thereof has been omitted.

In the following, a wireless communication system to which embodiments according to the present disclosure are applied is described. The wireless communication system to which the embodiments according to the present disclosure are applied is not limited to the contents described below, and the embodiments according to the present disclosure can be applied to various wireless communication systems. A wireless communication system may be referred to as a 'wireless communication network'.

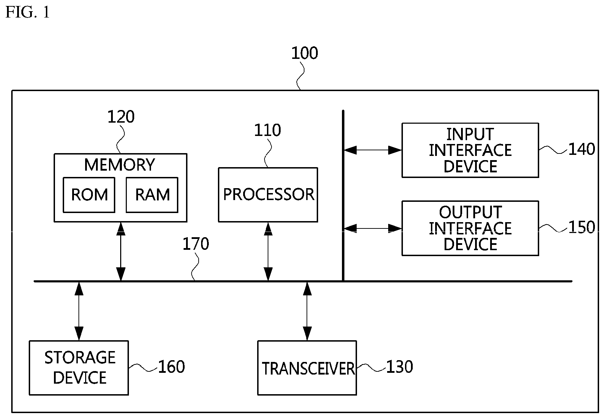

FIG. 1 is a block diagram illustrating a first embodiment of a communication node constituting a wireless local area network (LAN) system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, or the storage device 160 through a dedicated interface.

The processor 110 may execute at least one instruction stored in at least one of the memory 120 or the storage device 160. The processor 110 may refer to a central processing unit (CPU), a graphics processing unit (GPU), or a dedicated processor on which the methods according to the embodiments of the present invention are performed. Each of the memory 120 and the storage device 160 may be configured as at least one of a volatile storage medium or a nonvolatile storage medium. For example, the memory 120 may be configured with at least one of a read only memory (ROM) or a random access memory (RAM).

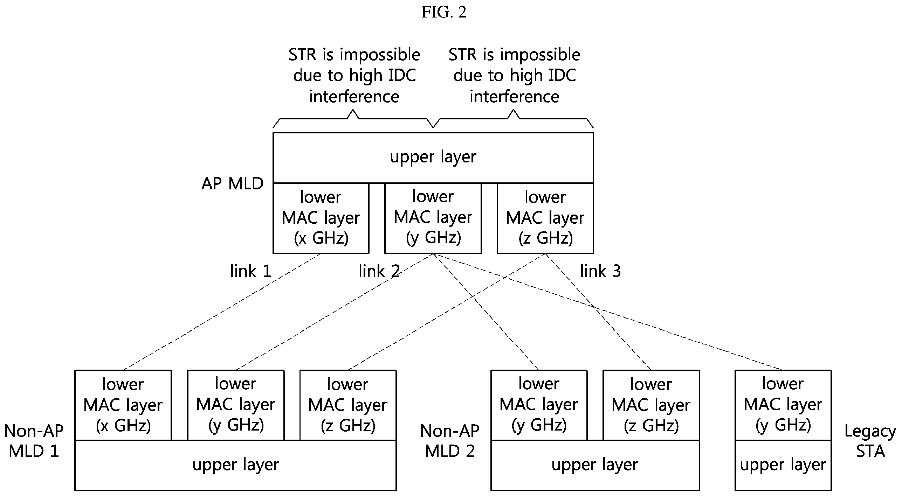

FIG. 2 is a conceptual diagram illustrating a first embodiment of multi-links configured between MLDs.

As shown in FIG. 2, an MLD may have one medium access control (MAC) address. In embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the APs having different MAC addresses may be in charge of each link among multiple links supported by the AP MLD and may perform a role of an independent AP.

Each of the STAs having different MAC addresses may be in charge of each link among multiple links supported by the non-AP MLD, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band and may perform communications using a 160 MHz bandwidth according to a channel expansion scheme in a 5 GHz band. The MLD may perform communications using a 160 MHz bandwidth in the 5 GHz band and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical layer convergence procedure (PLCP) protocol data unit (PPDU) 1 using the link 1 among multiple links and may receive a PPDU 2 using the link 2 among multiple links. On the other hand, if the MLD performs the STR operation when the band separation between multiple links is insufficient, in-device coexistence (IDC) interference, which is interference between the multiple links, may occur. Therefore, when the band separation between multiple links is not sufficient, the MLD may not be able to perform the STR operation. A link pair having the above-described interference relationship may be a non-simultaneous transmit and receive (NSTR) limited link pair. Here, the MLD may be an NSTR AP MLD or an NSTR non-AP MLD.

For example, a multi-link including a link 1, a link 2, and a link 3 may be configured between the AP MLD and the non-AP MLD 1. If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the AP MLD may not be able to perform an STR operation using the link 1 and the link 2. If a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a STA and an AP.

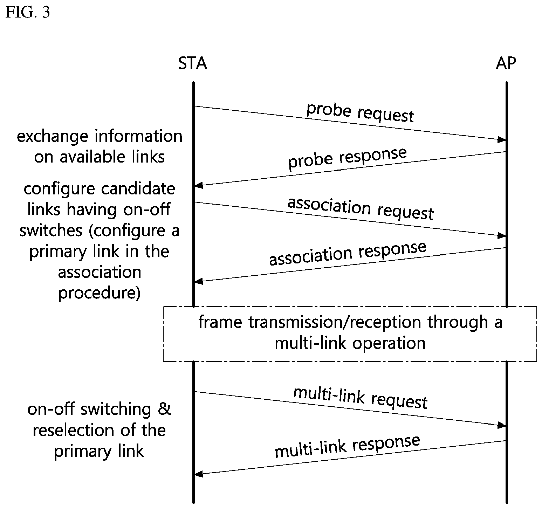

FIG. 3 is a sequence chart illustrating a first embodiment of a negotiation procedure for a multi-link operation in a wireless LAN system.

As shown in FIG. 3 an access procedure between an STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more APs using a passive scanning scheme or an active scanning scheme. When the passive scanning scheme is used, the STA may detect one or more APs by overhearing beacons transmitted by the one or more APs. When the active scanning scheme is used, the STA may transmit a probe request frame and may detect one or more APs by receiving probe response frames that are responses to the probe request frame from the one or more APs.

When the one or more APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step and may perform the association step with the selected AP. In other words, the STA may transmit an association request frame to the selected AP and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between an STA and an AP. In this case, multi-link information elements (ML IEs) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA may transmit information of link(s) to be used for the multi-link operation. The negotiation procedure for the multi-link operation may be performed in the access procedure (e.g., association step) between the STA and the AP, and information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

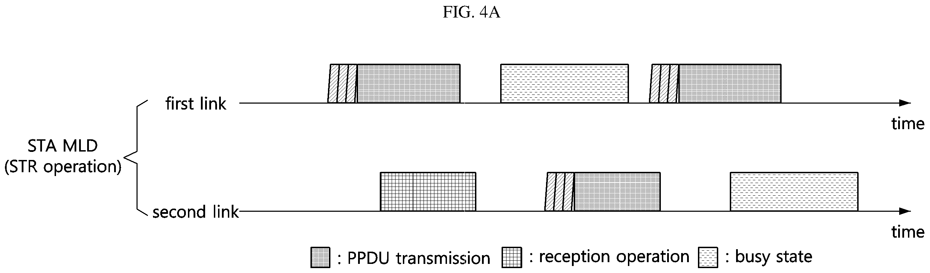

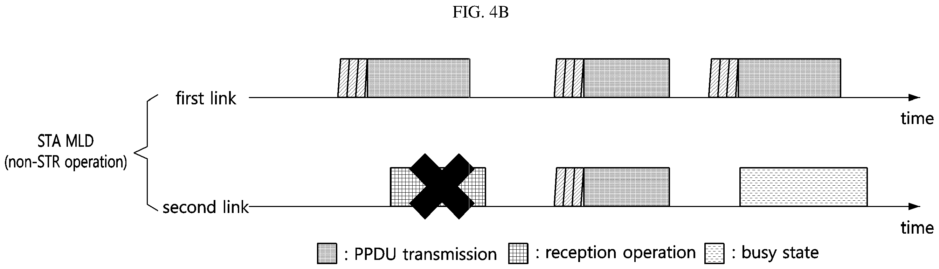

FIG. 4A is a timing diagram illustrating a first embodiment of a channel access method in a wireless LAN system supporting a multi-link, and FIG. 4B is a timing diagram illustrating a second embodiment of a channel access method in a wireless LAN system supporting a multi-link.

As shown in FIGS. 4A and 4B, when a band separation between a plurality of links is sufficient, a transmission operation in a first link and a reception operation in a second link may be simultaneously performed. The transmission operations using the multi-link may be implemented in a per-link independent transmission scheme. The above-described transmission operations may be performed in a device (e.g., AP or STA) capable of supporting an STR operation. In other words, the above-described transmission operations may be performed in a link pair other than an NSTR-limited link pair.

When the independent transmission scheme is used, a lower layer (e.g., physical (PHY) layer and/or a MAC layer) may separately perform a channel access operation in each link (e.g., the first link and the second link) to transmit a frame (e.g., PDU) obtained from an upper layer. When a transmission opportunity (TXOP) is secured by the channel access operation, the lower layer may transmit the frame within the corresponding TXOP.

The channel access operation may be a carrier sensing operation performed for an arbitration interframe space (AIFS) according to data (e.g., access category (AC) of the data) included in the frame. The carrier sensing operation may be referred to as a 'channel sensing operation'. When a channel (e.g., link) is determined to be in a busy state by the carrier sensing operation or when a transmission of a data frame of another station is completed, the channel access operation may include a carrier sensing operation within the AIFS and a backoff operation.

The carrier sensing operation may be classified into a physical (PHY layer) carrier sensing operation and a virtual carrier sensing operation. The physical carrier sensing operation may be an energy detection (ED) operation of sensing a received power in an operating channel (e.g., operating link). The virtual carrier sensing operation may include a setting operation based on a value of a length field included in a preamble of a frame (e.g., PPDU or MPDU) received from another station and a network allocation vector (NAV) setting operation based on a value of a duration field of a MAC header or a value of a TXOP field included in a frame received from another station. The NAV setting operation may be an operation of setting a parameter for configuring a transmission prohibition period or the transmission prohibition period as a time when a terminal does not start transmission (i.e., a time when another terminal performs a transmission operation). A transmission time may be independent of a physical channel sensing result. The NAV setting operation may be an operation of setting a period (e.g., busy period) in which transmission of a frame is prohibited by a value of a duration field included in a MAC header of a frame transmitted by terminals within and/or out of a basic service set (BSS). When the virtual carrier sensing is successful and a NAV is set, a period for which the NAV is set may be determined as a busy period without performing actual carrier sensing.

When the independent transmission scheme is used, transmission times of frames in the links (e.g., link 1 and link 2) may not match. Since the channel access operation in each of the links is performed independently, the links can be used efficiently. In embodiments, a backoff operation (e.g., backoff procedure, random backoff operation) may mean a channel access procedure performed when a channel state is determined to be a busy state.

On the other hand, when the band separation between the plurality of links is not sufficient, a transmission operation in the first link may cause interference to the second link of the same device. The aforementioned interference may be in-device coexistence interference (IDC). In embodiments, the device may mean an MLD, an AP, and/or a STA. When such an IDC interference occurs, an STR operation may not be possible in the plurality of links. A link pair in which an STR operation is not possible may be referred to as an 'NSTR-limited link pair'. For example, when a device uses two links (e.g., first link and second link) operating in a 5 GHz band, if a separation between the links is not sufficient, it may not be possible to simultaneously perform a transmission operation in the first link and a reception operation in the second link. Therefore, the multi-link operation may not be implemented in the per-link independent transmission scheme. In this case, the multi-link operation may be implemented in a synchronized transmission scheme. In embodiments, the multi-link operation may mean a transmission/reception operation using a multi-link.

When a transmission event occurs, the device may perform a channel connection operation. For example, the device may identify a channel occupancy state, and when a channel state is in an idle state, the device may perform an additional channel sensing operation for a specific time period (e.g., AIFS). When the channel state is in an idle state for the specific time period, the device may finally determine that the channel is in the idle state. In other words, the device may determine that the channel access is successful. In this case, a backoff operation may not be performed, and a backoff counter value may be 0.

On the other hand, when the channel state is in a busy state (e.g., occupied state), the device may wait until the channel state becomes an idle state. When the channel state is changed from the busy state to the idle state, the device may perform a backoff operation after waiting for an AIFS. The AIFS may start from a time when the channel state is changed from the busy state to the idle state. When the backoff operation is successfully completed, the device may transmit a frame.

When the backoff operation is performed, the device may select an arbitrary number (e.g., backoff counter value) from 0 to a contention window (CW). The CW may be set differently according to an access category (AC) of data. The device may perform a channel sensing operation in slot(s) corresponding to the selected backoff counter value. For example, when the backoff count value is 5, the device may perform the channel sensing operation in 5 slots (e.g., slots 1 to 5).

The channel sensing operation may be performed in each slot, and when the channel sensing operation is successful in each slot, the backoff counter value may decrease by one. When the channel state in the slot 1 is determined to be the idle state as a result of the channel sensing operation in the slot 1, the backoff counter value may be set to 4 (e.g., 5-1). When the channel state in the slot 2 after the slot 1 is determined to be the idle state as a result of the channel sensing operation, the backoff counter value may be set to 3 (e.g., 4-1). When the channel state in the slot 5 that is the last slot is determined to be the idle state as a result of the channel sensing operation, the backoff counter value may be set to 0 (e.g., 1-1). When the backoff counter value becomes 0, the device may determine that the backoff operation is successful.

When the channel access operation is successful and a transmission event does not occur, the device may wait for transmission of a frame (e.g., data). Thereafter, when a transmission event occurs, the device may immediately transmit the frame without a backoff operation because the channel access operation has already succeeded. In other words, when the backoff counter value is maintained at 0, the device may transmit a frame without a backoff operation.

When the synchronized transmission scheme is used, transmission start times and/or transmission end times of frames transmitted in the respective links may be set identically. In order to match the frame transmission times equally in the multi-link operation based on the synchronized transmission scheme, if the lengths of frames transmitted in the respective links are different, padding bits may be added to a frame having a shorter length to match the lengths of the frames. When channel access operations for simultaneous transmissions are performed, a backoff operation is performed in the first link, and a channel state of the second link from a specific time to an end time (e.g., success time) of the backoff operation in the first link is an idle state, the device may perform transmission operations using the plurality of links (e.g., the first link and the second link). A time from the specific time to the end time of the backoff operation in the first link may be a point coordination function (PCF) interframe space (PIFS), a distributed coordination function (DCF) interframe space (DIFS), AIFS, or a total time of the backoff operation in the first link.

'Identifying the channel occupancy state of the second link for the time from the specific time to the end time of the backoff operation in the first link' may be for 'identifying whether the channel occupancy state of the second link is the idle state in which frame transmission is possible'. In other words, 'identifying the channel occupancy state of the second link for the time from the specific time to the end time of the backoff operation in the first link' may mean 'performing the channel sensing operation (e.g., carrier sensing operation) in the second link for the time from the specific time to the end time of the backoff operation in the first link'.

In order to perform simultaneous transmissions using the first link and the second link, channel access operations may be performed. In this case, the channel acess operations may be simultaneously performed in the first link and the second link. If the second link is in an idle state at a start time of the channel access operation, and the idle state of the second link is maintained for a specific time (e.g., AIFS), the device may determine the second link to be in the idle state. In this case, since a backoff operation may not be performed in the second link, a backoff counter value thereof may be 0. Here, the first link may be referred to as a 'primary link' and the second link may be referred to as a 'secondary link'.

Meanwhile, after the backoff operation ends in the first link, an operation of identifying a channel occupancy state may be performed in the second link for a specific time period. When the channel state of the second link is a busy state for some time within the specific time period, the device may transmit a frame using only the first link. Alternatively, the device may perform a backoff operation in the second link. Alternatively, the device may perform a backoff operation in a plurality of the first links for channel access. The plurality of first links may be configured, and the backoff operation may be performed in the plurality of first links. In this case, when the channel state of the second link is in an idle state for a time period (hereinafter, referred to as 'specific time period') from an end time of a backoff operation in a link in which the backoff operation is first completed to a time before a specific time (e.g., PIFS, DIFS, AIFS, or a total time of the backoff operation of the first link), the device may perform transmission operations using the plurality of links.

'Identifying whether another link is in an idle state for the specific time period' may be 'identifying whether the link is in an idle state in which frame transmission is possible'. 'Identifying whether another link is in an idle state for the specific time period' may mean 'performing a channel sensing operation (e.g., carrier sensing operation) for the specific time period from the end time of the backoff operation in the first link to a time before a specific time'. In order to perform simultaneous transmissions using the first link and other link(s), a channel access operation may be performed. In other words, when the channel access operation is started in the first link, a channel access operation may be started in other link(s) at the same time. When a link in an idle state exists at the start time of the channel access operation and the idle state of the link is maintained for a specific time period (e.g., AIFS), the corresponding link may be determined as a link capable of simultaneous transmission. Since the backoff operation is not performed in the link in the idle state at the start of the channel access operation, a backoff counter value may be 0 in the link, which is in the idle state.

When a multi-link operation is performed based on the synchronized transmission scheme, a receiving device (e.g., STA or AP) may receive a plurality of frames simultaneously. Accordingly, a frame reception operation may be simplified. A frame (e.g., data) transmitted in the synchronized transmission scheme may include information on the links used for the simultaneous transmissions. The information (e.g., link IDs, etc.) of the links used for the simultaneous transmissions may be indicated in a bitmap form by an EHT signal (SIG) including information on a signal of the IEEE 802.11be in a preamble of a PPDU. Alternatively, the information (e.g., link IDs, etc.) of the links used for the simultaneous transmissions may be indicated by an EHT control field included in the frame.

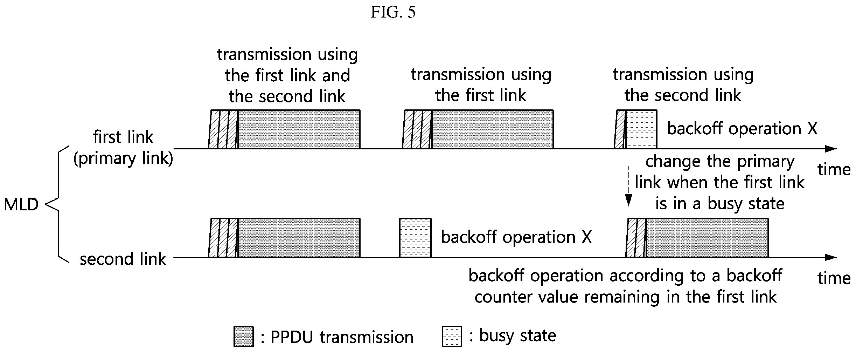

FIG. 5 is a timing diagram illustrating a third embodiment of a channel access method in a wireless LAN system supporting a multi-link.

As shown in FIG. 5, a device may perform a multi-link operation in a situation where a band separation between a plurality of links is not sufficient. In this case, a contention operation for channel access (e.g., distributed coordination function (DCF) or enhanced distributed channel access function (EDCAF), etc.) may be performed in a link configured to perform a backoff operation. When a state of the second link is idle for a specific time period (e.g., PIFS, DIFS, AIFS, or a total time of the backoff operation in the first link) from a specific time to a time when the channel access operation in the first link is completed, the device may perform transmission operations using a plurality of links (e.g., first link and second link).

'Identifying whether the second link is in an idle state for the specific time period' may be for 'identifying whether the second link is in an idle state in which frame transmission is possible'. 'Identifying whether the second link is in an idle state for the specific time period' may mean 'performing a channel sensing operation (e.g., carrier sensing operation) for the specific time period before an end time of the backoff operation in the first link'. When channel access operations for simultaneous transmissions using the first link and the second link are started, the channel access operations may be simultaneously started in the first link and the second link. When the second link is in an idle state at the start time of the channel access operation, and the idle state of the second link is maintained for a specific time period (e.g., AIFS) from the start time of the channel access operation, the simultaneous transmission operations may be performed.

When the channel state of the second link is identified for the specific time period after the backoff operation ends in the first link, if the second link is in a busy state for some time within the specific time period, the device may transmit a frame by using only the first link.

When the channel state of the first link is a busy state and the channel of the second link is in an idle state for a specific time period (e.g., DIFS, AIFS, or a total time of the backoff operation in the first link), the second link may be in an idle state in which frame transmission is possible. The specific time period may start from a time at which the channel access operation is started in the first link. When the second link is in an idle state, a backoff counter value thereof may be an initial value (e.g., 0).

When the first link is determined to be in a busy state, a link in which a backoff operation is performed may be changed from the first link to the second link to quickly transmit data. In other words, the link in which the backoff operation is performed may be configured as the second link. The device may perform the backoff operation in the second link for the remaining time and may perform a transmission operation in the second link when the backoff operation is successful. For example, when the backoff counter value in the first link is n, and the first link is determined to be busy in a slot corresponding to (n-k), the device may set the backoff counter value in the second link to (n-k) and may perform the backoff operation based on the set backoff counter value. In other words, the backoff operation in the second link may be performed based on the remaining backoff counter value of the backoff operation in the first link. Each of n and k may be a natural number, and n may be greater than k. k may be the number of slots determined to be idle in the first link.

A time (e.g., DIFS or AIFS) for identifying the channel occupancy state of the secondary channel (e.g., the second link) may be determined according to a channel contention scheme (e.g., DCF or EDCAF). According to the above-described operation, when the first link is congested (e.g., when the first link is in a busy state), the device may not wait until the first link becomes an idle state. In this case, the device may perform a transmission operation using the second link. Thus, a frame (e.g., data) can be transmitted quickly. Alternatively, even when the channel state is an idle state for a specific time period in the second link and the backoff counter value is 0, the device may perform a backoff operation for fairness, and when the backoff operation is successful, the device may transmit a frame.

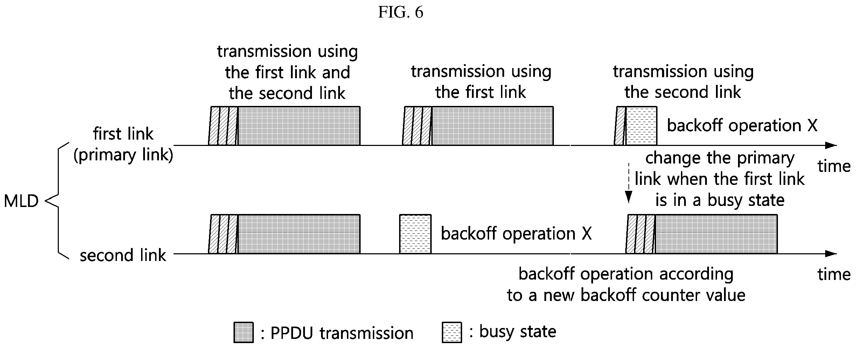

FIG. 6 is a timing diagram illustrating a fourth embodiment of a channel access method in a wireless LAN system supporting a multi-link.

As shown in FIG. 6, a device may perform a backoff operation in a first link, and the first link may be determined to be in a busy state. A second link may be in an idle state for a specific time period (e.g., DIFS, AIFS, or a total time of the backoff operation of the first link) from a specific time to a time at which the first link is determined to be in the busy state. A backoff counter value for the second link may be 0, and the second link may be in an idle state in which frame transmission is possible. Even when the second link is in the idle state, if the backoff operation is being performed in the first link, a frame transmission operation may not be performed in the second link. When the first link is in a busy state, it may be configured that a backoff operation is performed in the second link. In this case, a frame (e.g., data) can be transmitted quickly.

In order to maintain fairness with other devices performing backoff operations in the channel access procedure, in the link where the backoff operation is performed, the device may select a new backoff counter value and use the selected backoff counter value to perform the backoff operation. If the backoff operation is successful, the device may perform a transmission operation using the corresponding link.

In the procedure of selecting the new backoff counter value, since the backoff counter value is already 0, and the channel is in an idle state for an AIFS, the size of the contention window (CW) and a QoS short retry counter (QSRC) for selecting the new backoff counter value may be initial values. The device may set any value between 0 and CW as the backoff counter value.

Meanwhile, in the embodiments shown in FIGS. 5 and 6, when the link in which the backoff operation is performed is changed to the second link, a result of performing the backoff operation in the second link may indicate a busy state. In this case, the following operations may be performed according to a duration of the busy state in the first link and the second link.

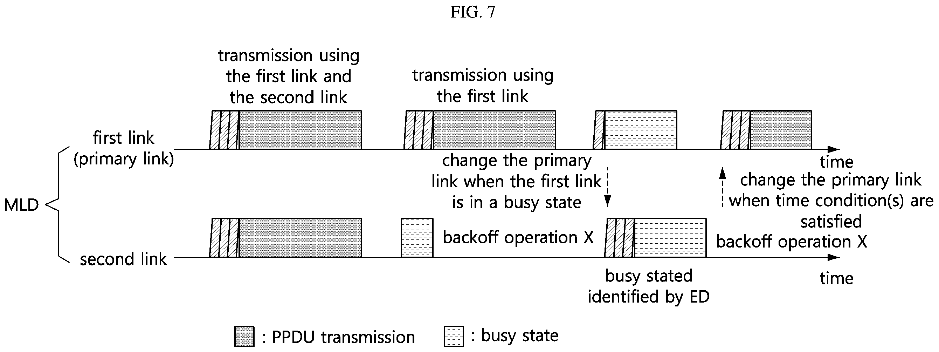

FIG. 7 is a timing diagram illustrating a fifth embodiment of a channel access method in a wireless LAN system supporting a multi-link.

As shown in FIG. 7, a channel access operation for a multi-link operation may be performed. When a channel of a first link is congested, a channel state of the first link may be determined to be a busy state. In this case, one link having a backoff counter value of 0 (e.g., one link in an idle state) among second links may be configured as a link in which a backoff operation is performed. The device may perform the backoff operation using the remaining backoff counter value (e.g., the remaining backoff counter value in the first link) or a new backoff counter value in the corresponding link (e.g., the second link). In other words, the backoff operation may be performed in the second link.

When the second link is determined to be in a busy state by the backoff operation and one or more of the following conditions are satisfied, the device may reconfigure the first link (e.g., the first link on which the previous backoff operation has been performed) as a link in which a backoff operation is performed.
- Condition 1: When a duration of the busy state in the first link or the second link cannot be identified (e.g., when the busy state is identified by ED)
- Condition 2: When an end time of the busy state in the second link is later than an end time of the busy state in the first link

When the above-described condition(s) are satisfied, the device may perform a backoff operation in the first link. The backoff operation in the first link may be performed using a remaining backoff counter value. The remaining backoff counter value may be the remaining backoff counter value of the backoff operation performed in the first link before the link in which the backoff operation is performed is changed to the second link. Alternatively, the remaining backoff counter value may be ['remaining backoff counter value of the backoff operation performed in the first link before changing the link in which the backoff operation is performed to the second link' - 'the number of slots determined to be in an idle state by the backoff operation in the second link']. Alternatively, the backoff operation in the first link may be performed using a new backoff counter value.

When the backoff operation is successful in the first link, the device may perform a transmission operation using the first link. Alternatively, if the second link is in an idle state for a specific time period (e.g., PIFS, DIFS, AIFS, or a total time of the backoff operation in the first link) from a specific time to an end time of the backoff operation in the first link, the device may perform a transmission operation using the plurality of links (e.g., the first link and the second link).

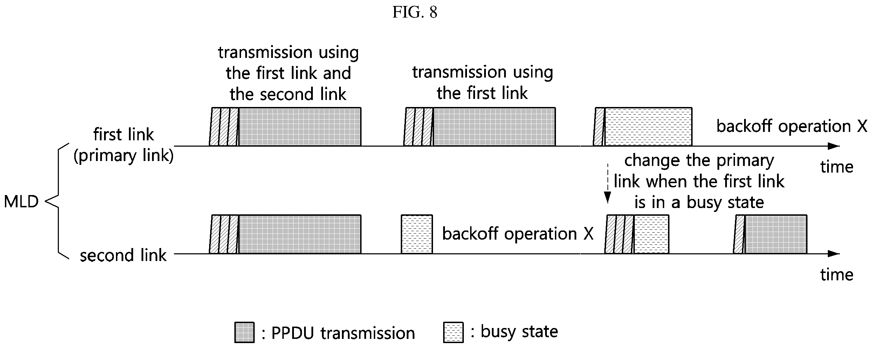

FIG. 8 is a timing diagram illustrating a sixth embodiment of a channel access method in a wireless LAN system supporting a multi-link.

As shown in FIG. 8, when a channel state of a first link is a busy state, the device may change a link in which a backoff operation is performed from the first link to a second link. The device may perform the backoff operation in the second link. Even when a result of performing the backoff operation in the second link indicates a busy state, if all of the following conditions are satisfied, the device may continue to perform the backoff operation in the second link.
- Condition 1: When a duration of the busy state in the first link and the second link can be identified (e.g., when the busy state is identified by PD or NAV)
- Condition 2: When an end time of the busy state in the second link is earlier than an end time of the busy state in the first link

When the above-described condition(s) is satisfied, the device may continue to perform a channel access operation for a multi-link operation in the second link. If the channel state is an idle state for a preset period (e.g., DIFS or AIFS) from the end time of the busy state in the second link, the device may perform a backoff operation by using the remaining backoff counter value (e.g., the remaining backoff counter value of the backoff operation performed previously in the second link) or a new backoff counter value. If a result of performing the backoff operation indicates an idle state, the device may transmit a frame (e.g., data) using the second link. Thereafter, if the channel state of the second link is determined to be a busy state again, the device may perform the method illustrated in FIG. 7 or the method illustrated in FIG. 8 according to the end time of the busy state in the second link.

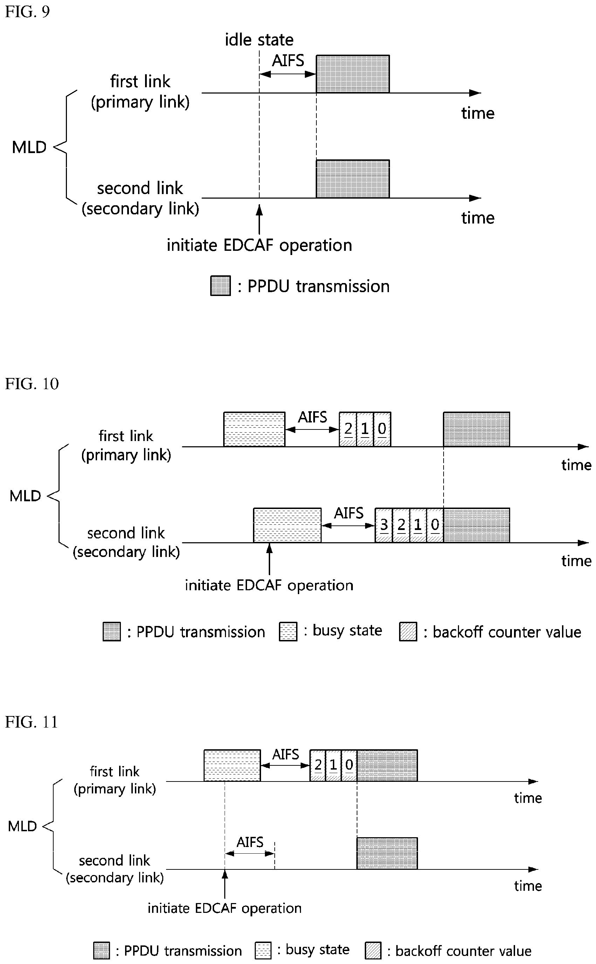

FIG. 9 is a timing diagram illustrating a seventh embodiment of a channel access method in a wireless LAN system supporting a multi-link.

As shown in FIG. 9, when a frame is transmitted using a multi-link, a plurality of links mapped to the frame may be used. Among the plurality of links, there may exist link(s) in which simultaneous transmission/reception operations are impossible due to interference between adjacent links. The link(s) in which simultaneous transmission/reception operations are impossible may be NSTR-limited link(s). When multi-link transmission is performed using the NSTR-limited links, the synchronized transmission scheme may be used.

In order to perform a channel access operation in a multi-link, parameters for a backoff operation (hereinafter, referred to as 'backoff parameters') may be managed for each link. The backoff parameters may include CW[AC], QSRC[AC], and/or backoff counter value. An initial value of CW[AC] may be set to a CWmin[AC]. Whenever a packet collision occurs, CW[AC] may be set as a result of min(CWmax[AC], 2QSCR[AC]×(CWmin[AC]+1)). When a backoff operation is started, a backoff counter value may be randomly selected with a uniform distribution between 0 and CW[AC]. The initial value of CW[AC] and/or an initial value of QSRC[AC] may be determined according to an AC of data. When a backoff operation is not started, the backoff counter value may be set to the initial value (e.g., 0). When the backoff operation is successful, the backoff counter value may be maintained at the initial value (e.g., 0) until a new backoff operation is started.

When the simultaneous transmission operations are performed in the multi-link, channel access operations may be simultaneously performed in the first link and the second link. There may be two or more second links, and the second links may be secondary links. The channel access operation may be referred to as an 'enhanced distributed channel access function (EDCAF) operation'. The EDCAF operation may be started in each link (e.g., each channel). A result of a sensing operation in the first link and the second link may indicate an idle state, and the idle state may be maintained for an AIFS. In this case, in each of the first link and the second link, the backoff counter value may be 0, and the channel state may be an idle state. Since frame transmission is possible in both the first link and the second link, the device may simultaneously transmit frames (e.g., data) using the first link and the second link.

FIG. 10 is a timing diagram illustrating an eighth embodiment of a channel access method in a wireless LAN system supporting a multi-link.

As shown in FIG. 10, when a frame is transmitted using a multi-link, a plurality of links mapped to the frame may be used. Among the plurality of links, there may exist link(s) in which simultaneous transmission/reception operations are impossible due to interference between adjacent links. The link(s) in which simultaneous transmission/reception operations are impossible may be NSTR-limited link(s). When multi-link transmission is performed using the NSTR-limited links, the synchronized transmission scheme may be used.

In order to perform a channel access operation in a multi-link, parameters for a backoff operation may be managed for each link. The backoff parameters may include CW[AC], QSRC[AC], and/or backoff counter value. An initial value of CW[AC] and/or an initial value of QSRC[AC] may be determined according to an AC of data. When a backoff operation is not started, the backoff counter value may be set to an initial value (e.g., 0). When the backoff operation is successful, the backoff counter value may be maintained at the initial value (e.g., 0) until a new backoff operation is started.

When the simultaneous transmission operations are performed in the multi-link, channel access operations (e.g., EDCAF operations) may be simultaneously performed in the first link and the second link. There may be two or more second links, and the second links may be secondary links. The EDCAF operation may be started in each link (e.g., each channel).

When the channel states are busy states in the first link and the second link, the device may wait until the busy state ends in each link. When the busy state ends in the first link, the device may perform a backoff operation if the channel state is in an idle state for a preset period (e.g., AIFS) from an end time of the busy state in the first link. Here, a backoff counter value may be set to a value arbitrarily selected from 0 and CW[AC]. For example, the backoff counter value may be selected to be 2.

After the busy state ends in the first link, the busy state may end in the second link. In this case, the device may perform a backoff operation if the channel state is in an idle state for a preset period (e.g., AIFS) from an end time of the busy state in the second link. Here, a backoff counter value may be set to a value arbitrarily selected from 0 and CW[AC]. For example, the backoff counter value may be selected to be 3.

The backoff operation may first succeed in the first link. In other words, the backoff counter value in the first link may be 0. If the backoff operation is completed in the first link and the backoff operation is not completed in the second link, the device may not perform a frame transmission operation in the first link. In other words, the device may wait for frame transmission while maintaining the backoff counter value at 0 in the first link.

Thereafter, the backoff operation may succeed in the second link. In other words, the backoff operation in the second link may be successful after the backoff operation in the first link is successful. When the backoff operation is completed in the second link, the backoff counter value in the second link may be 0. Since the backoff counter value is 0 in both the first link and the second link, the device may transmit frames (e.g., data) simultaneously using the first link and the second link.

FIG. 11 is a timing diagram illustrating a ninth embodiment of a channel access method in a wireless LAN system supporting a multi-link.

As shown in FIG. 11, when a frame is transmitted using a multi-link, a plurality of links mapped to the frame may be used. Among the plurality of links, there may exist link(s) in which simultaneous transmission/reception operations are impossible due to interference between adjacent links. The link(s) in which simultaneous transmission/reception operations are impossible may be NSTR-limited link(s). When multi-link transmission is performed using the NSTR-limited links, the synchronized transmission scheme may be used.

In order to perform a channel access operation in a multi-link, parameters for a backoff operation may be managed for each link. The backoff parameters may include CW[AC], QSRC[AC], and/or backoff counter value. An initial value of CW[AC] and/or an initial value of QSRC[AC] may be determined according to an AC of data. When a backoff operation is not started, the backoff counter value may be set to an initial value (e.g., 0). When the backoff operation is successful, the backoff counter value may be maintained at the initial value (e.g., 0) until a new backoff operation is started.

When the simultaneous transmission operations are performed in the multi-link, channel access operations (e.g., EDCAF operations) may be simultaneously performed in the first link and the second link. There may be two or more second links, and the second links may be secondary links. By performing the channel access operation, the device may determine a channel state of the first link as a busy state and determine a channel state of the second link as an idle state. In the second link, the idle state may be maintained for a preset time (e.g., AIFS) from a start time of the channel access operation. In this case, the backoff counter value of the second link may be set to 0. In other words, the channel state of the second link may be the idle state. Even when the channel state of the second link is in the idle state, the device may not transmit a frame in the second link. In other words, if the channel state of the second link is in an idle state, but the backoff operation is not completed in the first link, the device may not transmit a frame in the second link. The device may wait for frame transmission while maintaining the backoff count value of the second link as 0.

When the busy state ends in the first link, the device may perform a channel sensing operation for a preset period (e.g., AIFS). The channel sensing operation may be performed at the end time of the busy state in the first link. If the channel state of the first link is an idle state for an AIFS, the device may perform a backoff operation in the first link. If the backoff operation in the first link is successful (e.g., when the backoff counter value is 0 in the first link), the device may identify the channel state of the second link (e.g., the backoff counter value of the second link). If the channel state of the second link is the idle state and/or the backoff counter value is 0 in the second link, the device may transmit frames (e.g., data) simultaneously using the first link and the second link.

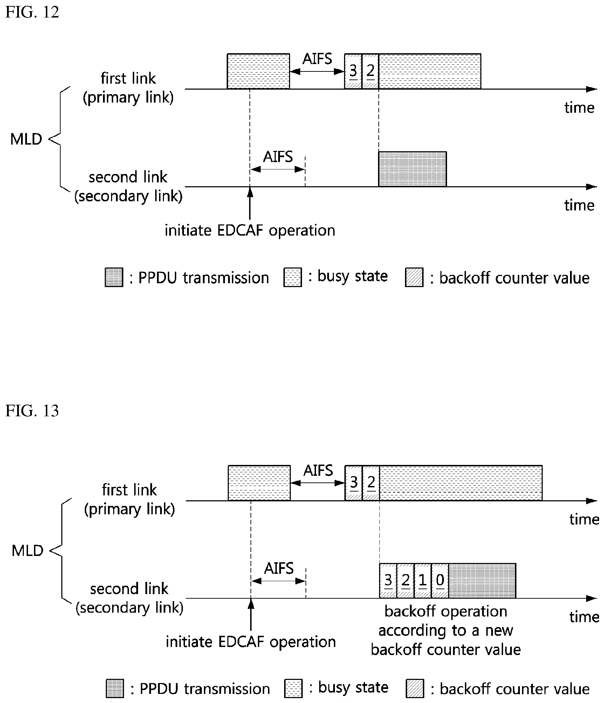

FIG. 12 is a timing diagram illustrating a tenth embodiment of a channel access method in a wireless LAN system supporting a multi-link.

As shown in FIG. 12, when a frame is transmitted using a multi-link, a plurality of links mapped to the frame may be used. Among the plurality of links, there may exist link(s) in which simultaneous transmission/reception operations are impossible due to interference between adjacent links. The link(s) in which simultaneous transmission/reception operations are impossible may be NSTR-limited link(s). When multi-link transmission is performed using the NSTR-limited links, the synchronized transmission scheme may be used.

In order to perform a channel access operation in a multi-link, parameters for a backoff operation may be managed for each link. The backoff parameters may include CW[AC], QSRC[AC], and/or backoff counter value. An initial value of CW[AC] and/or an initial value of QSRC[AC] may be determined according to an AC of data. When a backoff operation is not started, the backoff counter value may be set to an initial value (e.g., 0). When the backoff operation is successful, the backoff counter value may be maintained at the initial value (e.g., 0) until a new backoff operation is started.

When the simultaneous transmission operations are performed in the multi-link, the device may simultaneously perform channel access operations (e.g., EDCAF operations) in the first link and the second link. There may be a plurality of second links, and the plurality of second links may be secondary links. By performing the channel access operation, the device may determine a channel state of the first link as a busy state and determine a channel state of the second link as an idle state. In the second link, the idle state may be maintained for a preset time (e.g., AIFS) from a start time of the channel access operation. In this case, the backoff counter value of the second link may be set to 0. In other words, the channel state of the second link may be the idle state. Even when the channel state of the second link is in the idle state, the device may not transmit a frame in the second link. In other words, if the channel state of the second link is in an idle state, but the backoff operation is not completed in the first link, the device may not transmit a frame in the second link. The device may wait for frame transmission while maintaining the backoff count value of the second link as 0.

When the busy state ends in the first link, the device may perform a channel sensing operation for a preset period (e.g., AIFS). The channel sensing operation may be performed at the end time of the busy state in the first link. If the channel state of the first link is an idle state for an AIFS, the device may perform a backoff operation in the first link. While the backoff operation is being performed, the channel state of the first link may be changed from the idle state to a busy state. In other words, according to a result of performing the backoff operation, the first link may be determined to be in the busy state. In this case, if the backoff counter value of the second link is 0 and/or if the second link is in an idle state, the device may transmit a frame (e.g., data) using the second link. The transmission operation in the second link may be performed after the channel state of the first link is determined to be a busy state.

FIG. 13 is a timing diagram illustrating an eleventh embodiment of a channel access method in a wireless LAN system supporting a multi-link.

As shown in FIG. 13, when a frame is transmitted using a multi-link, a plurality of links mapped to the frame may be used. Among the plurality of links, there may exist link(s) in which simultaneous transmission/reception operations are impossible due to interference between adjacent links. The link(s) in which simultaneous transmission/reception operations are impossible may be NSTR-limited link(s). When multi-link transmission is performed using the NSTR-limited links, the synchronized transmission scheme may be used.

In order to perform a channel access operation in a multi-link, parameters for a backoff operation may be managed for each link. The backoff parameters may include CW[AC], QSRC[AC], and/or backoff counter value. An initial value of CW[AC] and/or an initial value of QSRC[AC] may be determined according to an AC of data. When a backoff operation is not started, the backoff counter value may be set to an initial value (e.g., 0). When the backoff operation is successful, the backoff counter value may be maintained at the initial value (e.g., 0) until a new backoff operation is started.

When the simultaneous transmission operations are performed in the multi-link, the device may simultaneously perform channel access operations (e.g., EDCAF operations) in the first link and the second link. There may be a plurality of second links, and the plurality of second links may be secondary links. By performing the channel access operation, the device may determine a channel state of the first link as a busy state and determine a channel state of the second link as an idle state. In the second link, the idle state may be maintained for a preset time (e.g., AIFS) from a start time of the channel access operation. In this case, the backoff counter value of the second link may be set to 0. In other words, the channel state of the second link may be the idle state. Even when the channel state of the second link is in the idle state, the device may not transmit a frame in the second link. In other words, if the channel state of the second link is in an idle state, but the backoff operation is not completed in the first link, the device may not transmit a frame in the second link. The device may wait for frame transmission while maintaining the backoff count value of the second link as 0.

When the busy state ends in the first link, the device may perform a channel sensing operation for a preset period (e.g., AIFS). The channel sensing operation may be performed at the end time of the busy state in the first link. If the channel state of the first link is an idle state for an AIFS, the device may perform a backoff operation in the first link. While the backoff operation is being performed, the channel state of the first link may be changed from the idle state to a busy state. In other words, according to a result of performing the backoff operation, the first link may be determined to be in the busy state. In this case, if the backoff counter value of the second link is 0 and/or if the second link is in an idle state, the device may perform a backoff operation in the second link. The backoff operation in the second link may be performed based on a new backoff counter value. Alternatively, the backoff operation in the second link may be performed based on the remaining backoff counter value of the backoff operation stopped in the first link. If the backoff operation is successful, the device may transmit a frame (e.g., data) in the second link.

The embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those having ordinary skill in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above hardware device can be configured to operate as at least one software module in order to perform the embodiments of the present disclosure, and vice versa.

While the embodiments of the present disclosure and their advantages have been described in detail, it should be understood that various changes, substitutions, and alterations may be made herein without departing from the scope of the present disclosure.

## Claims

1. An operation method of a device using a multi-link in a wireless local area network (LAN), the operation method comprising:
performing a first backoff operation in a first link in the multi-link;
in response to determining the first link to be in a busy state by the first backoff operation, stopping the first backoff operation; and
in response to identifying that a second link in the multi-link is in an idle state for a preset period before a time at which the first backoff operation is stopped, performing a second backoff operation in the second link using a new backoff counter value.

2. The operation method according to claim 1, further comprising:
in response to determining the second link to be in a busy state by the second backoff operation, stopping the second backoff operation; and
performing a third backoff operation in the first link when the busy state of the first link ends,
wherein the third backoff operation is performed based on a remaining backoff counter value of the stopped first backoff operation.

3. The operation method according to claim 1, further comprising:
in response to determining the second link to be in a busy state by the second backoff operation, stopping the second backoff operation; and
performing a third backoff operation in the second link when the busy state of the second link ends,
wherein the third backoff operation is performed based on a remaining backoff counter value of the stopped second backoff operation.

4. The operation method according to claim 1, wherein when the first backoff operation is stopped, a link in which the device performs the backoff operation is changed from the first link to the second link.

5. The operation method according to claim 1, wherein the new backoff counter value is selected within a contention window and is independent of a backoff counter value of the first backoff operation.

6. The operation method according to claim 1, wherein when the second link is in the idle state for the preset period, a backoff counter value of the second link is maintained at 0.

7. The operation method according to claim 1, wherein the preset period is an arbitration interframe space (AIFS).

8. The operation method according to claim 1, wherein the second backoff operation is performed when the second link is in the idle state for the preset period and a backoff counter value of the second link is maintained at 0.

9. The operation method according to claim 1, wherein even when the second link is in the idle state for the preset period, if the first backoff operation is being performed in the first link, a frame transmission operation is not performed in the second link.

10. A device using a multi-link in a wireless local area network (LAN), the device comprising:
a processor;
a first communication node performing communications using a first link in the multi-link according to control of the processor;
a second communication node performing communications using a second link in the multi-link according to control of the processor; and
a memory storing one or more instructions executable in each of the processor, the first communication node, and the second communication node,
wherein the one or more instructions are configured to
cause the first communication node to perform a first backoff operation in the first link,
cause the first communication node to, in response to determining the first link to be in a busy state by the first backoff operation, stop the first backoff operation, and
cause the second communication node to, in response to identifying that the second link is in an idle state for a preset period before a time at which the first backoff operation is stopped, perform a second backoff operation in the second link using a new backoff counter value.

11. The device according to claim 10, wherein the one or more instructions are configured to:
further cause the second communication node to, in response to determining the second link to be in a busy state by the second backoff operation, stop the second backoff operation; and
further cause the first communication node to perform a third backoff operation in the first link when the busy state of the first link ends,
wherein the third backoff operation is performed based on a remaining backoff counter value of the stopped first backoff operation.

12. The device according to claim 10, wherein the one or more instructions are configured to:
further cause the second communication node to, in response to determining the second link to be in a busy state by the second backoff operation, stop the second backoff operation; and
further cause the second communication node to perform a third backoff operation in the second link when the busy state of the second link ends,
wherein the third backoff operation is performed based on a remaining backoff counter value of the stopped second backoff operation.

13. The device according to claim 10, wherein when the first backoff operation is stopped, a link in which the device performs the backoff operation is changed from the first link to the second link.

14. The device according to claim 10, wherein the new backoff counter value is selected within a contention window and is independent of a backoff counter value of the first backoff operation.

15. The device according to claim 10, wherein when the second link is in the idle state for the preset period, a backoff counter value of the second link is maintained at 0.

16. The device according to claim 10, wherein the preset period is an arbitration interframe space (AIFS).

17. The device according to claim 10, wherein the second backoff operation is performed when the second link is in the idle state for the preset period and a backoff counter value of the second link is maintained at 0.

18. The device according to claim 10, wherein even when the second link is in the idle state for the preset period, if the first backoff operation is being performed in the first link, a frame transmission operation is not performed in the second link.
